# FASCICULE DE BREVET EUROPEEN

(11) **EP 1 032 611 B1**
(45) Date de publication et mention de la délivrance du brevet: **28.07.2004**
(21) Numéro de dépôt: 98958741.5
(22) Date de dépôt: 20.11.1998
(51) Int. Cl.: C08J 11/16, B29B 17/02

(54) **PROCEDE ET INSTALLATION POUR LA SEPARATION DES CONSTITUANTS DES PNEUS USAGES**
VERFAHREN UND ANLAGE ZUR ABTRENNUNG VON KOMPONENTEN AUS ALTREIFEN
METHOD AND INSTALLATION FOR SEPARATING CONSTITUENTS OF USED TYRES

(30) Priorité: 20.11.1997 BE 9700933
(43) Date de publication de la demande: 06.09.2000
(73) Titulaire: Debailleul, Gérard, 1703 Schepdaal (BE)
(72) Inventeur: Debailleul, Gérard, 1703 Schepdaal (BE)
(74) Mandataire: Claeys, Pierre
(86) Numéro de dépôt international: PCT/BE1998/000180
(87) Numéro de publication internationale: WO 1999/027004

(56) Documents cités:
- EP-A- 0 070 789
- WO-A-97/15614
- FR-A- 345 793
- GB-A- 2 026 144
- US-A- 1 807 930

## Description

La présente invention est relative à un procédé et une installation pour le traitement du caoutchouc vulcanisé de tous genres, tels que des pneus, des courroies de transport, bottes, chaussures et autres objets contenant des matières assemblées de caoutchouc et de polymères en vue d'un recyclage des composant par les industries concernées.

La masse de ces matiéres est représentée surtout par l'accroissement du développement des transports routiers qui provoque des quantités inquiétantes de pneus déclassés difficiles à éliminer et si possible à recycler.

Il ne faut pas oublier que plus de 3 milliards de pneus, rien qu'en véhicules de tourisme, circulent sur les routes des différents pays et sont, bien entendu, à remplacer périodiquement. En poids, cela représente au moins 18 millions de tonnes de déchets volumineux dont il faut se débarrasser, ce qui constitue un problème écologique sérieux et difficile à résoudre, surtout depuis que l'on devient de plus en plus conscient des problèmes et prescriptions relatifs à l'environnement.

Une grande quantité de pneus est détruite par incinération et dans les fourneaux de cimenteries avec récupération d'énergie calorifique. Cette solution est de plus en plus contestée en raison de la pollution atmosphérique et de la destruction de matières intéressantes à récupérer.

Un autre procédé consiste en un broyage successif pour arriver à de petites particules pouvant servir de charges dans les bitumes et asphaltes. Ces broyages ont été facilités par les techniques de la cryogénie. Cependant, les déchiqueteurs multiples, indispensables pour arriver à cisailler les armatures métalliques de renforcement, pour produire de la poudrette réutilisable, sont de lourdes machines dévoreuses d'énergie et par conséquent très coûteuses.

D'autres procédés pour la destruction avec récupération de certains composants sont basés sur pyrolyse (voir par example EP-A-70789). Le recyclage consiste en la récupération de l'huile de pyrolyse, du carbone ainsi que des métaux. Ces procédés sont performants. mais ils entraînent l'investissement de sommes importantes et des coûts de traitement élevés, ils sont souvent à l'origine d'une pollution atmosphérique importante.

C'est ainsi que l'on a intensifié les efforts pour développer des méthodes pour se débarrasser d'une manière efficace, économique et non polluante de ces déchets encombrants pour l'environnement. De nombreux chercheurs se sont attaqués au problème qui ne concerne évidemment pas seulement les pneus usagés, mais l'ensemble des produits manufacturés en caoutchouc et aussi des déchets accompagnant la fabrication de ces produits. souvent renforcés par des armatures en métal ou en matières synthétiques. Le problème final ne réside pas seulement dans la destruction économique de l'élément caoutchouc ou des pneus, mais il est également souhaitable de pouvoir récupérer et recycler les, ou une partie des composants dans le but d'éviter un gaspillage inutile de matières intéressantes

Dans le but d'illustrer l'état de la technique dans ce domaine, il convient de mentionner les publications suivantes:
- GB 2 026 144 (1979) d'écrivant une installation pour le traitement des déchets de caoutchouc et des matières synthétiques provenant de pneus usagés La décomposition thermique du produit, réduit grossièrement, est réalisée dans un lit fluidisé de sable à 800° C en présence d'oxygène. Les gaz provenant de la décomposition sont utilisés et à la fin du processus, les métaux de renforcement sont récupérés à l'aide d'aimants.
- US 4,426,459 (pnor JP 1980) divulgue un procédé pour la décomposition du caoutchouc vulcanisé par un traitement vers 100° C avec un solvant organique en présence d'un hydroxyde alcalin tel que l'hydroxyde de potassium
- DE 3313470 (1983) se rapporte à une méthode et à un dispositif pour le traitement à une température supérieure à 200° C pendant 10 à 35 min. dans une phase liquide, composée d'huiles minérales usagées et de solvants organiques On obtient un produit visqueux pouvant servir d'adjuvant dans les bitumes ou les couches d'isolation
- WO 97/1561 (pnor US 1995 et 1996) décrit un procédé pour la dévulcanisation du caoutchouc provenant de pneus déclassés par désulfuration vers 300° C au moyen d'un métal alcalin dans un milieu ne contenant pas d'oxygène et ceci avant ou pendant un traitement par un solvant organique après avoir opéré une séparation des constituants des pneus, tels que l'acier et autres renforcements.

Beaucoup de ces procédés présentent des désavantages, soit du côté des investissements, du rendement, de la complexité, de l'environnement ou du marché.

La présente invention a pour but de remédier à ces désavantages et de proposer un procédé et une installation simple permettant ia séparation des déchets de caoutchouc vulcanisés et/ ou collés, tels que pneus, courroies, ou autres objets et d'assurer la récupération des constituants une vue d'une réutilisation par l'industrie, sans présenter un danger pour l'environnement. La séparation des caoutchoucs des autres matières et des renforcements, métalliques ou autres armatures, est assurée facilement, rapidement et d'une manière économique, les armatures en résines synthétiques étant dissoutes et le métal récupéré. Ainsi il est possible de fournir à l'industrie des produits de qualité à des prix compétitifs.

Pour résoudre ces problèmes on a prévu, suivant l'invention, un procédé de traitement de déchets de caoutchouc vulcanisé, en particulier de pneumatiques de toutes dimensions et de toutes natures et/ou d'autres objets en caoutchouc renforcé usagés, tels que bottes, bateaux gonflables, ce procédé comprenant :
- un tranchage grossier desdits déchets en morceaux, et
- une attaque desdits morceaux par une base pure fondue.
Ce procédé est caractérisé en ce que ladite attaque des morceaux est effectuée dans des conditions de température provoquant en présence de ladite base d'attaque une désolidarisation des déchets de caoutchouc vulcanisé en fragments solides désolidarisés, de composition polymérique,
et en ce que le procédé comprend en outre
- une séparation entre ladite base fondue et lesdits fragments solides désolidarisés,
- une neutralisation des fragments solides désolidarisés, et
- un recyclage ou revalorisation des fragments solides désolidarisés, neutralisés.

Le procédé comprend donc essentiellement les étapes suivantes:
A) Les déchets de caoutchouc vulcanisé, renforcé ou non, sont réduits grossièrement par tranchage à l'aide d'une cisaille, de préférence du type guillotine, équipée de couteaux en caillebotis pour obtenir des morceaux de 10 à 25 cm de longueur. Ceci a pour seul objectif la diminution de l'encombrement et de faciliter ainsi la manipulation pendant le processus de traitement.
B) Les déchets réduits sont introduits dans un réacteur et traités pendant 30 minutes à 350° C avec un générateur d'ions OH-, de préférence une forte base alcaline telle que du NaOH fondu. 3. Séparation du liquide basique et des résidus provenant du caoutchouc traité.
C) Neutralisation des résidus par un acide, tel que l'acide phosphorique;
D) Récupération et séparation des constituants du caoutchouc et des métaux ayant servi de renforcement.

La destruction de certaines liaisons du caoutchouc avec les autres matières de renforcement est obtenue par l'action d'une forte base alcaline, telle que du NaOH fondu, et maintenu à une température de 350 °C pendant environ 30 minutes.
Il est important de signaler, que la consommation en agent basique est très faible et le liquide d'attaque pourra être réutilisé plusieurs fois par récupération et réinjection, le volume du produit liquide NaOH en circulation sera réajusté automatiquement si nécessaire, par un nouvel apport du produit . D'autre part, il faut souligner, que le procédé conformément à la présente invention ne fait appel à aucun solvant organique. De plus, il travaille avec des déchets tranchés seulement grossièrement et les produits servant au traitement proposé sont bien connus et d'un usage courant et peu onéreux.

D'autres particularités du procédé suivant l'invention sont indiquées dans les revendications 1 à 8.

L'installation pour la mise en oeuvre du procédé est relativement simple et n'entraîne pas des investissements démesurés.

Des détails et particularités de l'installation suivant l'invention sont indiqués dans les revendications 9 à 15.

Les détails du procédé conformément à la présente invention rassortiront de la description de l'installation y relative, donnée à titre d'exemple non limitatif.
- La Figure 1 représente d'une manière schématique l'ensemble de l'installation;
- La Figure 2 représente à une plus grande échelle la première partie d'une des variantes possibles de l'installation;
- La Figure 3 représente à une plus grande échelle la deuxième partie d'une des variantes possibles de l'installation.

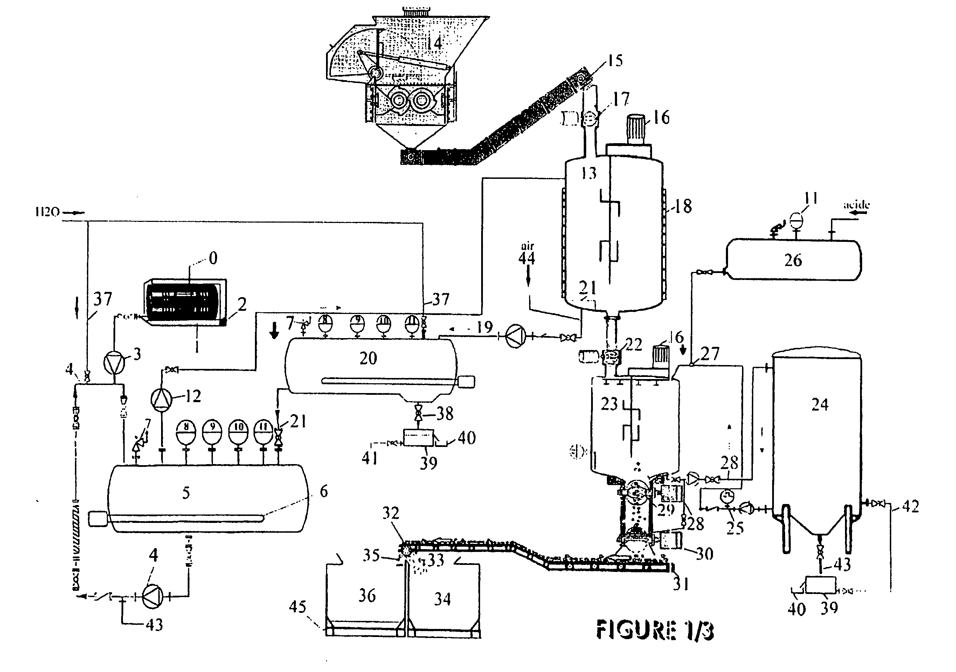

D'après la Figure 1, du NaOH cristallisé dans son emballage d'origine est fondu dans le four 1, à une température de 300 à 400°C, avant d'être introduit dans la cuve mère 5, muni d'un chauffage et dans laquelle le NaOH est maintenu à la température de 380°C avant d'être transféré dans le réacteur 13 dans lequel sont également introduits les déchets provenant de la cisaille 14. Après 30 minutes d'immersion et sous agitation au départ de l'obtention de la température de 350°C. Le liquide est conduit par le réseau 19 munit d'une pompe, vers la cuve tampon 20 et renvoyé ensuite vers la cuve mère 5. La cuve tampon est chauffée à une température de 380 °C pour éviter que des chocs thermiques se produisent dans la cuve 5. D'autre part, la cuve tampon est conçue pour récolter les précipités et organisée pour la séparation et le retrait des petites particules Les produits de décomposition du réacteur 13 sont transférés dans la cuve de neutralisation 23 et à la fin du traitement, les résidus sont transportés vers le dispositif de triage magnétique 32 où les métaux sont séparés des polymères résultant du traitement.

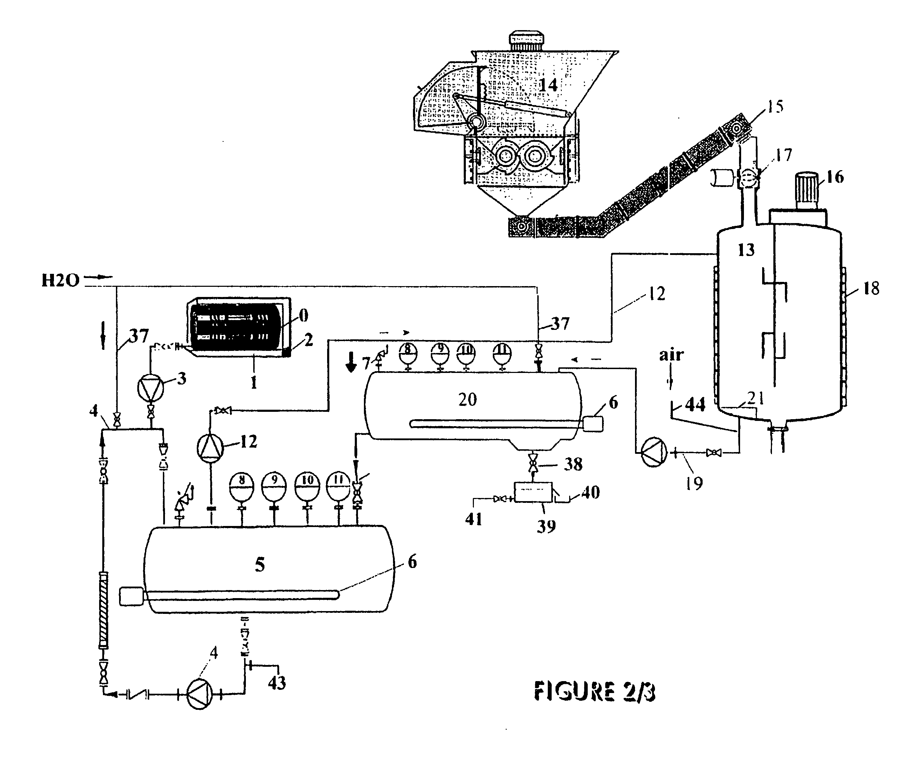

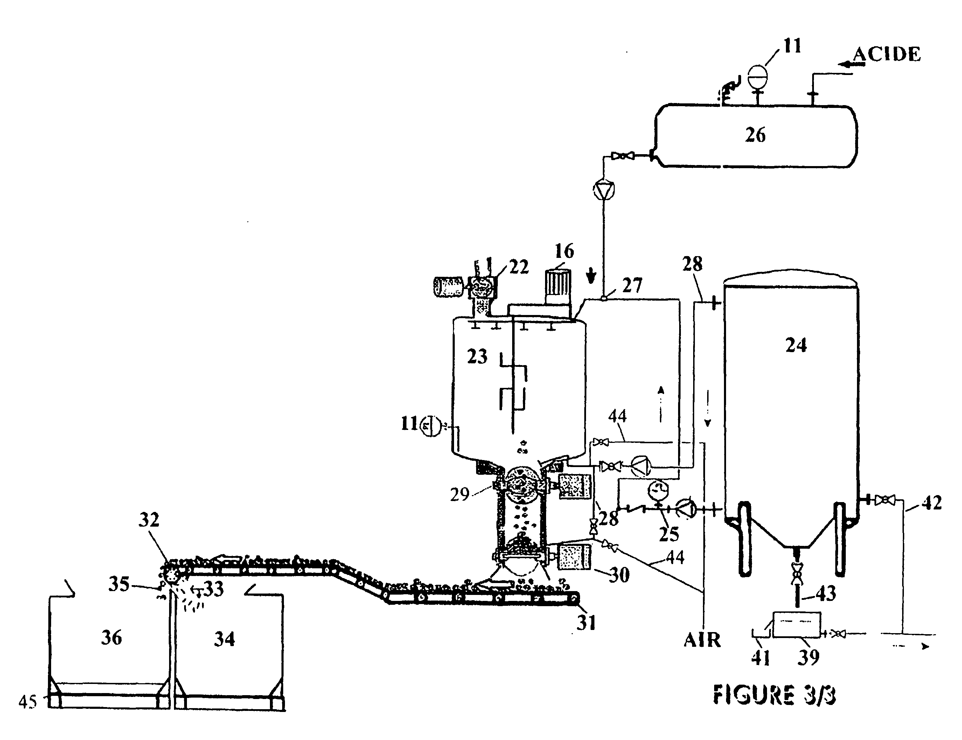

D'après cet exemple de réalisation illustré plus en détail par les Figures 2 et 3 : un fût 0 contenant du NaOH cristallisé est introduit dans le four 1 épousant la forme du fût dans lequel le NaOH est chauffé à une temoérature de 380° C au moins La partie supérieure et la partie verticale droite du four forment un capot ouvrant autour de l'axe 2 fixé sur le fond droit du four pour permettre un chargement facile du fût. Un tube de connexion conduisant à la pompe 3 est introduit et connecté à la bonde du fût.

Le NaOH liquéfié est transféré dans la cuve mère 5, dans laquelle il est maintenu à 350° C.

La cuve mère 5 est équipée des instruments traditionnels de contrôle et de réglage 8 à 11, connus de l'homme du métier, qui surveillent les conditions dans la cuve et actionnent les commandes électroniques de pilotage au moment des transferts et autres actions. La soupape de sécurité réglementaire 7 évite les surpressions inattendues et accidentelles, et l'élément de chauffage 6 (peut être placé à l'extérieur entre l'isolation par des serpentins véhiculant un liquide chaux) garde la température constante à l'intérieur de la cuve.

Le liquide est envoyé par le réseau 12, équipé d'une pompe, dans le réacteur 13, et les déchets, découpés dans la cisaille 14, avantageusement une guillotine, sont acheminés par le convoyeur à chaîne 15 dans le réacteur 13, les matières solides doivent être immergées, la quantité de liquide caustique est atteinte par la commande et le contrôle d'une sonde qui actionne également la fermeture de la vanne 17 et le début du brassage assuré par le mélangeur 16 La température du réacteur est maintenue par le système de chauffage 18. Après environ 30 minutes de traitement à 350°C, les matières sont désolidarisées, le liquide caustique est extrait par le réseau 19, équipé d'une pompe, ceci à travers le filtre 21, vers la cuve tampon 20. Le filtre 21 retient les particules supérieures à 1 mm. Il est désobstrué par à-coups par la fermeture de la vanne du réseau 19 et l'envoi d'air comprimé 44 sur la partie reliée à la cuve 13 du réseau 18.

La cuve tampon 20, est équipée des mêmes appareils de contrôle, de commande et de chauffage que la cuve 5, elle a une configuration qui permet la décantation, et la remise à la température de 350° C du liquide caustique pour éviter les chocs thermiques et les risques de cristallisation dans la cuve mère 5 Le liquide en partie décanté et à bonne température dans la cuve tampon 20 est ensuite reconduit à travers le réseau 21 par gravité lentement dans la cuve mère 5.

Quand tout le liquide caustique est soutiré du réacteur 13, la grande vanne 22 s'ouvre et libère par gravité les matières du réacteur 13 dans la cuve de neutralisation 23.

Les liquides de neutralisation des traitements précédents et des nettoyages de l'installation, en provenance de la cuve 24 sont conduits par le réseau 25, équipé d'une pompe, vers la cuve de neutralisation 23, dans lequel le liquide est injecté par des têtes de pulvérisation. L'acide phosphorique provenant de la cuve 26 passe par le bloc de mélange 27, sur le réseau 25 Les matières et le liquide sont soumis à un grand brassage Le pH mètre 11 règle le pH = 7 après encore quelques brassages il y a une période d'attente pour permettre la précipitation des matières en suspension, le liquide neutralisé est extrait jusqu'au niveau du branchement du réseau 28 muni d'une pompe. sur la cuve 23. Des injections d'air 44 dans ce réseau ont pour but de décolmater le filtre installé en fin du réseau 28

Le liquide neutralisé soutiré, la grande vanne 29 s'ouvre tandis que la vanne 30 reste fermée Le liquide neutralisé se trouve dans le tube avec les matières entre les deux vannes 29 et 30, il est soutiré à travers la déviation du réseau 28, également équipée en fin de réseau d'un filtre décolmaté par injection d'air par à-coups 44, et ensuite dirigé dans la cuve 24 Après l'évacuation du reste du liquide, la vanne 30 s'ouvre progressivement pour libérer la matière solide venant de la cuve de neutralisation 23.

La matière est transportée par un tapis roulant jusqu'à la poulie magnétique 32 située à la fin du tapis. Les métaux 33 sont précipités dans le bac conteneur 34 et les matières 35 non-magnétiques arrivent dans le bac conteneur 36. Le conteneur 36 est muni d'un double fond, la matière étant déposée sur le premier fond muni d'un filtre en acier inoxydable dont la porosité est inférieure à 10 microns. L'assèchement de la matière est obtenue par écoulement du liquide par une tuyauterie latérale 45 Les conteneurs 34 et 36 sont superposables et à fonds ouvrants.

Le NaOH liquéfié a un point d'ébullition supérieur à 1000° C, il n'y a pas de formation de pression dans l'installation, cependant le matériel est calculé pour résister à une pression de 10 bars en prévision d'éventuels chocs thermiques

Comme il s'agit d'un traitement thermique, il est préférable de travailler en continu aussi longtemps que possible. Dans ce but, et pour éviter des arrêts dus à l'accumulation des impuretés et petites particules, des dispositifs de nettoyage sont prévus pour procéder à leurs éliminations, sans être obligé d'arrêter la production Après un certain nombre de traitements et en prévision du nettoyage de la cuve tampon 20, le liquide NaOH de la cuve mère 5 sera amené au niveau minimum pour recevoir toute la solution en stock dans la cuve tampon 20, jusqu'au niveau de la prise du réseau 21. Ensuite de l'eau sera ajoutée par le réseau 37 lentement dans le reste de liquide NaOH, fond de la cuve tampon 20 pour une dilution directe jusqu'au point de non cristallisation (concentration +/-40%). Après cette dilution, la vanne 38 s'ouvre sur un tamis vibrant 39 ayant une porosité de 10 microns. Les particules solides sont évacuées dans un bac 40 et pourront être transférées par la suite dans une cuve de lavage extérieure au système avec presse filtre pour les impuretés précipitées par la neutralisation et pour récupérer les matières à recycler dans un conteneurs du type 36 La solution NaOH à 40% est récupérée par la sortie 41 Elle sera mise en fût et commercialisée pour un autre usage ou bien introduite dans la cuve 24 pour obtenir un agent neutralisant et augmenter ainsi la rentabilité du processus

Un nettoyage en cours de production de la cuve de stockage 24 est également prévu. Cette cuve, ayant alimenté la cuve de neutralisation 23, le surplus du liquide neutre sera soutiré jusqu'au niveau de la prise du réseau 42 pour être mis en attente dans la cuve de neutralisation 23. Ceci sera organisé pendant le temps d'un traitement du réacteur 13 et de la neutralisation qui occupe le liquide Il faudra prévoir de faire le nettoyage de la cuve 24, et de retourner le liquide dans la cuve 23 vers 24 pendant ce temps de réaction et de neutralisation

Quand le niveau inférieur. correspondant à la prise de la sortie 42 est atteint, la vanne 43 s'ouvre et libère le liquide neutre chargé de particules sur un tamis vibrant identique à 39. Le liquide est évacué, les particules sont récupérées.

Pendant l'arrêt provisoire ou de courte de durée de l'installation, le chauffage de la cuve mère 5 et éventuellement tampon ne doit pas être coupé Pour un arrêt complet, Il sera indispensable de vider à chaud la cuve tampon 20 vers la cuve mère 5 et ensuite par le réseau 43, raccordé à une batterie de fûts dans lesquels la solution se cristallisera. Pour une réutilisation du NaOH, les fûts seront replacés dans le four 1.

Pour la neutralisation, le procédé fait appel à des acides, de préférence phosphorique pour la neutralisation. Il est tout à fait envisageable d'utiliser des matières telles que des solutions d'acides phosphoriques considérées comme déchets dans l'industrie, ce déchet est disponible en quantité importante. Le procédé accepte des concentrations diverses mêmes faibles, l'ajustement est fait automatiquement. Par conséquent, le système peut être considéré comme centre de neutralisation pour ces acides constituant un apport financier appréciable, réduisant ainsi le coût du traitement principal faisant l'objet de la présente invention

Les métaux récupérés seront dirigés vers la sidérurgie.

Les autres matières récupérées venant des pneumatiques sont friables et se transforment en une poudre fine à la moindre pression. La dévulcanisation n'est pas complète mais la rupture de certaines liaisons est assurée. Le caractère friable et la composition polymérique du résidu en font une matière de charge intéressante pour être recycler dans la fabncation des pneumatiques, d'articles en caoutchouc, et à d'autres usages non limitatifs tels que dans les bitumes ou autres enrobés.

Il est évident, que la présente invention n'est en aucune façon limitée à la forme de réalisation comme décnte dans l'exemple d'une réalisation illustré par les Figures 1. 2 et 3. Des variantes peuvent y être apportées sans pour autant sortir du cadre des revendications.

## Revendications

1. Procédé de traitement de déchets de caoutchouc vulcanisé, en particulier de pneumatiques de toutes dimensions et de toutes natures et/ou d'autres objets en caoutchouc renforcé usagés, tels que bottes, bateaux gonflables, ce procédé comprenant :
- un tranchage grossier desdits déchets en morceaux, et
- une attaque desdits morceaux par une base pure fondue,
**caractérisé en ce que** ladite attaque des morceaux est effectuée dans des conditions de température provoquant en présence de ladite base d'attaque une désolidarisation des déchets de caoutchouc vulcanisé en fragments solides désolidarisés, de composition polymérique,
et **en ce que** le procédé comprend en outre
- une séparation entre ladite base fondue et lesdits fragments solides désolidarisés,
- une neutralisation des fragments solides désolidarisés, et
- un recyclage ou revalorisation des fragments solides désolidarisés, neutralisés.

2. Procédé suivant la revendication 1, **caractérisé par** l'emploi de NaOH coulé pur fondu en guise de liquide d'attaque.

3. Procédé suivant l'une ou l'autre des revendications 1 et 2, **caractérisé en ce que** ladite séparation comprend une sédimentation des fragments désolidarisés, préalablement séparés de la base fondue, dans un liquide de sédimentation et de neutralisation, et après retrait du liquide de sédimentation et de neutralisation, la récolte des fragments désolidarisés.

4. Procédé suivant l'une quelconque des revendications de 1 à 3, **caractérisé en ce qu'**il comprend un recyclage de la base pure fondue.

5. Procédé suivant l'une quelconque des revendications 2 à 4, **caractérisé en ce que** la température de traitement par le NaOH fondu est d'au maximum 400°C, avantageusement d'au maximum 35°C.

6. Procédé suivant l'une quelconque des revendications 1 à 5, **caractérisé en ce que** les fragments solides désolidarisés comprennent des fragments métalliques et des fragments en matière synthétique et **en ce que** le procédé comprend en outre un tri entre les fragments désolidarisés métalliques et synthétiques avant leur recyclage ou revalorisation.

7. Procédé suivant l'une quelconque des revendications 1 et 6 **caractérisé en ce que** le traitement de désolidarisation se fait dans un réacteur fermé, les matières à traiter complètement immergées.

8. Procédé suivant l'une quelconque revendications de 1 à 7 **caractérisé en ce que** le neutralisation utilise des acides dilués, de préférence phosphorique, plus avantageusement des déchets de certaines solutions d'acide phosphorique.

9. Installation pour la mise en oeuvre du procédé de traitement de déchets de caoutchouc vulcanisé suivant l'une quelconque des revendications 1 à 8, **caractérisée en ce qu'**elle forme un ensemble complètement fermé, sans pollution atmosphérique, qui comprend :
- un dispositif de fusion (1) de ladite base pure,
- un réacteur (13) dans lequel sont introduits lesdits déchets de caoutchouc vulcanisé, grossièrement tranchés en morceaux, et ladite base pure fondue, comme milieu d'attaque, et dans lequel sont appliquées des conditions de température provoquant sous l'action du milieu d'attaque, une désolidarisation des déchets de caoutchouc vulcanisé en fragments solides désolidarisés, de composition polymérique,
- un dispositif de séparation (19, 20, 21) permettant de séparer la base fondue servant de milieu d'attaque et les fragments solides désolidarisés.
- un dispositif de neutralisation (23), alimenté en agent de neutralisation depuis une source d'agent de neutralisation (24, 25, 26), dans lequel a lieu une neutralisation des fragments solides désolidarisés, et
- un dispositif de tri des fragments solides désolidarisés, neutralisés.

10. Installation suivant la revendication 9, **caractérisée en ce que** le réacteur (13) présente des ouvertures d'entrée et de sortie obturables (17 et 22). un équipement de brassage(16), et **en ce que** ledit dispositif de séparation comprend un filtre(21) désobstrué si nécessaire par un dispositif à air comprimé (44) capable de retenir à l'intérieur du réacteur des particules supérieures à 1 mm.

11. Installation suivant l'une ou l'autre des revendications 9 et 10 **caractérisé en ce que** le dispositif de neutralisation comprend une cuve (23) équipée d'une entrée communicante à la sortie(22) du réacteur, et d'une sortie obturables, un équipement de brassage(16), et un filtre désobstrué si nécessaire par le dispositif à air comprimé sur le réseau de sortie avec extension (28), un équipement de pulvérisation pour faciliter la neutralisation par le réseau (27).

12. Installation suivant l'une ou l'autre revendication 9 à 11, **caractérisé en ce que** ie dispositif de neutralisation comprend un cuve (24) d'injection de liquide neutralisé et de récupération par les réseaux (25 et 28).

13. Installation suivant l'une ou l'autre revendication 9 à 12, **caractérisé en ce que** le dispositif de neutralisation comprend une autre cuve contenant des déchets d'acide (26) raccordée à un bloc de mélange (27), sur le réseau (25).

14. Installation suivant l'une ou l'autre revendication 9 à 13, **caractérisé en ce qu'**elle comprend des dispositifs de nettoyage des précipités et petites particules, en cours de traitement (38,39,40,41,42,43).

15. Installation suivant l'une ou l'autre revendication 9 à 14, **caractérisé en ce que** le dispositif de tri comprend un dispositif de transport des matières désolidarisées (31) avec séparation magnétique des matières métalliques (32) annexée éventuellement à un système au courant de Foucault pour les non- ferreux.

## Claims

1. Process for treating vulcanized rubber waste, particularly tyres of all sizes and of all types and/or of other worn reinforced-rubber articles, such as boots, inflatable boats, this process comprising:
- coarse cutting of the said waste into fragments, and
- attacking the said fragments using a molten pure base,
**characterized in that** the said attacking of the fragments is carried out under temperature conditions causing, in the presence of the said attacking base, deconsolidation of the vulcanized rubber waste into deconsolidated solid fragments of polymeric composition,
and **in that** the process furthermore comprises
- separating the said molten base from the said deconsolidated solid fragments,
- neutralizing the deconsolidated solid fragments and
- recycling or reutilizing the neutralized, deconsolidated solid fragments.

2. Process according to Claim 1, **characterized by** the use of molten pure cast NaOH as the attacking liquid.

3. Process according to either of Claims 1 and 2, **characterized in that** the said separation comprises sedimentation of the deconsolidated fragments, separated beforehand from the molten base, in a settling and neutralizing liquid, and, after removal of the settling and neutralizing liquid, recovery of the deconsolidated fragments.

4. Process according to any one of Claims 1 to 3, **characterized in that** it comprises a recycling of the molten pure base.

5. Process according to any one of Claims 2 to 4, **characterized in that** the molten NaOH treatment temperature is at most 400°C, advantageously at most 350°C.

6. Process according to any one of Claims 1 to 5, **characterized in that** the deconsolidated solid fragments comprise metal fragments and fragments made of synthetic material and **in that** the process furthermore includes sorting between the metallic and synthetic deconsolidated fragments before they are recycled or reutilized.

7. Process according to any one of Claims 1 to 6, **characterized in that** the deconsolidation treatment takes place in a closed reactor, the materials to be treated completely immersed.

8. Process according to any one of Claims 1 to 7, **characterized in that** the neutralization uses dilute acids, preferably phosphoric acid, more advantageously waste from certain phosphoric acid solutions.

9. Plant for implementing the process for treating vulcanized-rubber waste according to any one of Claims 1 to 8, **characterized in that** it forms a completely closed system, with no atmospheric pollution, which comprises:
- a device (1) for melting the said pure base;
- a reactor (13) into which the said vulcanized-rubber waste, coarsely cut into pieces, and the said molten pure base as attacking medium are introduced, and in which reactor temperature conditions are applied causing under the action of the attacking medium deconsolidation of the vulcanized-rubber waste into solid fragments of polymeric composition;
- a separating device (19, 20, 21) allowing the molten base serving as the attacking medium to be separated from the deconsolidated solid fragments;
- a neutralizing device (23), fed with neutralizing agent from a source (24, 25, 26) of neutralizing agent, in which device the deconsolidated solid fragments are neutralized; and
- a device for sorting the neutralized, deconsolidated solid fragments.

10. Plant according to Claim 9, **characterized in that** the reactor (13) has closeable inlet and outlet openings (17 and 22), stirring equipment (16), and **in that** the said separating device comprises a filter (21) if necessary unclogged by a compressed-air device (44) capable of retaining inside the reactor particles greater than 1 mm.

11. Plant according to either of Claims 9 and 10, **characterized in that** the neutralizing device comprises a tank (23) provided with an inlet communicating with the outlet (22) of the reactor, and with an outlet, the inlet and outlet being closeable, stirring equipment (16) and a filter if necessary unclogged by the compressed-air device in the output line with extension (28), spraying equipment for facilitating the neutralization via the line (27).

12. Plant according to any one of Claims 9 to 11, **characterized in that** the neutralizing device comprises a tank (24) for injection of neutralized liquid and for recovery via the lines (25 and 28).

13. Plant according to any one of Claims 9 to 12, **characterized in that** the neutralizing device comprises another tank (26) which contains acid waste and is connected to a mixing unit (27) in the line (25).

14. Plant according to any one of Claims 9 to 13, **characterized in that** it comprises devices for cleaning the precipitates and small particles, during treatment (38, 39, 40, 41, 42, 43).

15. Plant according to any one of Claims 9 to 14, **characterized in that** the sorting device comprises a device (31) for transporting the deconsolidated materials with magnetic separation of the metallic materials (32), possibly combined with an eddy-current system for the non-ferrous materials.

## Patentansprüche

1. Verfahren für die Verarbeitung von Abfällen aus vulkanisiertem Kautschuk, vor allem von Reifen aller Größen und aller Arten und/oder von anderen Gegenständen aus Kautschuk, die stark abgenutzt sind, wie etwa Stiefel, Schlauchbote, wobei dieses Verfahren folgendes aufweist:
- ein grobes Schneiden der Abfälle in Stücke und
- einen chemischen Angriff mit einer geschmolzenen reinen Base auf die Stücke
**dadurch gekennzeichnet, dass** der chemische Angriff auf die Stücke unter Temperaturbedingungen erfolgt, die bei Anwesenheit der angreifenden Base eine Auflösung der Abfälle aus vulkanisiertem Kautschuk in voneinander gelöste, feste Fragmente aus einer Polymerverbindung bewirken,
und dass das Verfahren außerdem aufweist:
- ein Trennen der geschmolzenen Base und der voneinander gelösten, festen Fragmente,
- ein Neutralisieren der voneinander gelösten, festen Fragmente und
- ein Rückführen oder Wiederverwerten der neutralisierten voneinander gelösten, festen Fragmente.

2. Verfahren nach Anspruch 1, **dadurch gekennzeichnet, dass** geschmolzenes reines NaOH in flüssiger Form als angreifende Flüssigkeit verwendet wird.

3. Verfahren nach einem der Ansprüche 1 und 2, **dadurch gekennzeichnet, dass** das Trennen ein Abscheiden der voneinander gelösten Fragmente, die vorher durch die geschmolzene Base getrennt worden sind, in einer Abscheidungs- und Neutrafisationsflüssigkeit und danach das Entfernen der Abscheidungs- und Neutralisationsflüssigkeit sowie das Gewinnen der voneinander gelösten Fragmente umfasst.

4. Verfahren nach einem der Ansprüche 1 bis 3, **dadurch gekennzeichnet, dass** es eine Wiederverwertung der geschmolzenen reinen Base umfasst.

5. Verfahren nach einem der Ansprüche 2 bis 4, **dadurch gekennzeichnet, dass** die Temperatur bei der Behandlung mit dem geschmolzenen NaOH höchstens 400 °C, vorzugsweise höchstens 350 °C beträgt.

6. Verfahren nach einem der Ansprüche 1 bis 5, **dadurch gekennzeichnet, dass** die voneinander gelösten, festen Fragmente metallische Fragmente und Fragmente aus Kunststoff umfassen, und dass es außerdem ein Sortieren der voneinander gelösten Metall- und Kunststofffragmente vor ihrer Rückführung oder Wiederverwertung umfasst.

7. Verfahren nach einem der Ansprüche 1 bis 6, **dadurch gekennzeichnet, dass** die Behandlung, um die Fragmente voneinander zu lösen, in einem geschlossenen Reaktor erfolgt, wobei die zu behandelnden Materialien vollständig eingetaucht sind.

8. Verfahren nach einem der Ansprüche 1 bis 7, **dadurch gekennzeichnet, dass** zum Neutralisieren verdünnte Säuren, vorzugsweise Phosphorsäure, insbesondere Abfallprodukte bestimmter Phosphorsäurelösungen verwendet werden.

9. Anlage zur Durchführung des Verfahrens für die Verarbeitung von Abfällen aus vulkanisiertem Kautschuk nach einem der Ansprüche 1 bis 8, **dadurch gekennzeichnet, dass** sie eine vollkommen abgeschlossene Baueinheit ohne Luftverunreinigung bildet, die folgendes aufweist:
- eine Vorrichtung (1) zum Schmelzen der reinen Base,
- einen Reaktor (13), in den die Abfälle aus vulkanisiertem Kautschuk grob in Stücke zerschnitten und die geschmolzene reine Base als angreifendes Mittel eingebracht werden und in dem Temperaturverhältnisse eingehalten angewendet werden, die bei Einwirken des angreifenden Mittels zu einem Auflösen der Abfälle aus vulkanisiertem Kautschuk in voneinander gelöste, feste Fragmente aus einer Polymerverbindung führen,
- eine Trennvorrichtung (19, 20, 21), die ermöglicht, die als angreifendes Mittel dienende geschmolzene Base von den voneinander gelösten, festen Fragmenten zu trennen,
- eine Neutralisationsvorrichtung (23), die von einer Neutralisationsmittelquelle (24, 25, 26) mit Neutralisationsmittel versorgt wird und in der ein Neutralisieren der voneinander gelösten, festen Fragmente erfolgt, und
- eine Vorrichtung zum Sortieren der neutralisierten voneinander gelösten, festen Fragmente.

10. Anlage nach Anspruch 9, **dadurch gekennzeichnet, dass** der Reaktor (13) verschließbare Einlass- und Auslassöffnungen (17 und 22) und eine Rühreinrichtung (16) aufweist, und dass die Trennvorrichtung ein Filter (21) umfasst, dessen Zusetzen gegebenenfalls mittels einer Druckluftvorrichtung (44) beseitigt wird, die in der Lage ist, Partikel, die größer als 1 mm sind, im Inneren des Reaktors zurückzuhalten.

11. Anlage nach einem der Ansprüche 9 und 10, **dadurch gekennzeichnet, dass** die Neutralisationsvorrichtung einen Behälter (23) umfasst, der einen verschließbaren Einlass, der mit dem Auslass (22) des Reaktors verbunden ist, und einen verschließbaren Auslass, eine Rühreinrichtung (16) und einen Filter, dessen Zusetzen gegebenenfalls über die Auslassleitung mit Verlängerung (28) mittels einer Druckluftvorrichtung (44) beseitigt wird, und einer Zerstäubungseinrichtung aufweist, um das Neutralisieren über die Auslaßleitung (27) zu erleichtern.

12. Anlage nach einem der Ansprüche 9 bis 11, **dadurch gekennzeichnet, dass** die Neutralisationsvorrichtung einen Behälter (24) zum Einspritzen der neutralisierten Flüssigkeit und zur Rückgewinnung über die Leitungen (25 und 28) umfasst.

13. Anlage nach einem der Ansprüche 9 bis 12, **dadurch gekennzeichnet, dass** die Neutralisationsvorrichtung einen weiteren Behälter umfasst, der Säureabfallprodukte (26) enthält und über die Leitung (25) an einen Mischblock (27) angeschlossen ist.

14. Anlage nach einem der Ansprüche 9 bis 13, **dadurch gekennzeichnet, dass** Vorrichtungen (38, 39, 40, 41, 42, 43) vorgesehen sind, die während der Behandlung Abscheidungen und kleine Partikel entfernen.

15. Anlage nach einem der Ansprüche 9 bis 14, **dadurch gekennzeichnet, dass** die Sortiervorrichtung eine Vorrichtung für den Transport der aufgelösten Stoffe (31) mit magnetischer Trennung der metallischen Stoffe (32) umfasst, die gegebenenfalls zusätzlich ein Foucault-Strom-System für die Nichteisenbeständigkeit hat.
